# EUROPÄISCHE PATENTSCHRIFT

(11) **EP 2 168 857 B1**
(45) Veröffentlichungstag und Bekanntmachung des Hinweises auf die Patenterteilung: **06.08.2014**
(21) Anmeldenummer: 09170454.4
(22) Anmeldetag: 16.09.2009
(51) Int. Cl.: B62K 19/16, B62K 21/02

(54) **Kunststoff-Fahrradgabel**
Plastic bicycle fork
Fourche de vélo en matière synthétique

(30) Priorität: 26.09.2008 DE 202008012840 U
(43) Veröffentlichungstag der Anmeldung: 31.03.2010
(73) Patentinhaber: Canyon Bicycles GmbH, 56073 Koblenz (DE)
(72) Erfinder: Thoma, Vincenz, 56068 Koblenz (DE)
(74) Vertreter: Von Kreisler Selting Werner - Partnerschaft von Patentanwälten und Rechtsanwälten mbB

(56) Entgegenhaltungen:
- DE-A1- 3 804 342
- DE-U1- 20 213 240
- DE-U1- 29 915 091
- US-A- 4 350 360
- US-A1- 2007 257 466

## Beschreibung

Die Erfindung betrifft eine Fahrradgabel aus faserverstärktem Kunststoff, insbesondere eine Carbon-Fahrradgabel.

Fahrradgabeln weisen zwei Gabelbeine auf, an deren Ausfallenden die Achse der Vorderradnabe aufgenommen ist. Das obere Ende der beiden Gabelbeine geht in die Gabelbrücke über. Mit der Gabelbrücke ist der Gabelschaft verbunden, der in montierten Zustand in dem Gabelrohr des Fahrradrahmens angeordnet ist. Insbesondere aus Gewichtsgründen werden Fahrradgabeln, insbesondere bei Rennrädern häufig aus Kunststoffmaterial, insbesondere faserverstärktem Kunststoffmaterial wie Carbon hergestellt. Insbesondere im Bereich des Übergangs zwischen Gabelbrücke und Gabelschaft treten die größten Kräfte auf. Es handelt sich hierbei insbesondere um einen kritischen Bereich, da es sich um das Zusammenführen der beiden Gabelbeine und den Übergang in den Gabelschaft handelt. Ferner ist in diesem Bereich das untere Lenkkopflager angeordnet, über das die auf die Fahrradgabel wirkenden Kräfte in das Gabelrohr und somit in den Fahrradrahmen eingeleitet werden.

Eine Fahrradgabel aus Carbon ist aus der US 2007/0257466-A1 bekannt. Diese weist im Bereich der Gabelbrücke eine Materialanhäufung zur Ausbildung eines Lagersitzes auf.

Eine gattungsgemäße Fahrradgabel ist aus der Patentschrift US 4 350 360 bekannt.

Aufgabe der Erfindung ist es, eine Fahrradgabel aus faserverstärktem Kunststoff zu schaffen, die insbesondere in dem Übergangsbereich zwischen Gabelbrücke und Gabelschaft stabil ausgebildet ist.

Die Lösung der Aufgabe erfolgt durch die Merkmale des Anspruchs 1.

Die erfindungsgemäße Fahrradgabel, bei der es sich um eine Fahrradgabel aus faserverstärktem Kunststoff wie Carbon handelt, weist erfindungsgemäß im Übergangsbereich zwischen der Gabelbrücke und dem Gabelschaft einen kragenförmigen Ansatz auf. Der kragenförmige Ansatz ist insbesondere ringförmig ausgebildet und umgibt im Übergangsbereich den Gabelschaft. Der kragenförmige Ansatz weist insbesondere den Vorteil auf, dass hierdurch eine Versteifung in Umfangsrichtung erfolgt. Hierdurch kann die Formstabilität der Fahrradgabel im Übergangsbereich, das heißt im Bereich der Gabelkrone verbessert werden.

Der insbesondere ringförmige Ansatz ist erfindungsgemäß derart ausgebildet, dass eine ringförmige Nut zwischen dem Ansatz und dem Gabelschaft ausgebildet ist. Die Nut ist vorzugsweise nach oben, das heißt in Richtung des Gabelschaftes offen. Aufgrund des Vorsehens des erfindungsgemäßen kragenförmigen Ansatzes können die Fasern eines faserverstärkten Kunststoffs in diesem Bereich belastungsgerechter mit einem größeren Radius angeordnet werden. Dies hat zur Folge, dass insbesondere in dem kritischen Übergangsbereich von der Gabel höhere Kräfte und Momente aufgenommen werden können.

Vorzugsweise ist die gesamte Fahrradgabel einschließlich Kragen einstückig, insbesondere aus faserverstärktem Kunststoff hergestellt.

Besonders bevorzugt ist es, dass der Außendurchmesser des Ansatzes im Wesentlichen dem unteren Außendurchmesser des Gabelrohrs des Fahrradrahmens entspricht. Hierdurch kann ein fließender Übergang zwischen der Fahrradgabel und dem Gabelrohr im unteren Bereich realisiert werden. Dies hat neben aerodynamischen Vorteilen, insbesondere den Vorteil, dass das untere Lenkkopflager vor Spritzwasser geschützt ist. Ein zusätzlicher Schutz vor Spritzwasser ist nicht erforderlich. Das zusätzliche Bauteil eines Spritzwasserschutzes kann somit erfindungsgemäß eingespart werden. Das Vorsehen des erfindungsgemäßen Kragens hat insbesondere den Vorteil, dass die äußeren Fasern nicht die Dicke des Gabelrohrs überbrücken müssen.

Vielmehr können die Fasern ausgehend von den Gabelbeinen derart geführt werden, dass sie unmittelbar, das heißt mit sanften Radien, in den Durchmesserbereich des Gabelschafts im Bereich des unteren Lagers überführt werden können. Die Fasern weisen daher keinen stark gekrümmten bzw. abgeknickten Verlauf im Übergangsbereich auf.

Insbesondere in Verbindung mit dem kragenförmigen Ansatz ist es besonders vorteilhaft, dass der Gabelschaft im Bereich der unteren Lageraufnahme einen möglichst großen Durchmesser aufweist. Hierdurch kann der Radius des Faserverlaufs in diesem Bereich weiter vergrößert werden. Hierbei ist es möglich, insbesondere in dem Übergangsbereich zwischen der Gabelbrücke und der Lageraufnahme große Radien zu realisieren. Insbesondere ist es möglich, in diesem Bereich Radien von mehr als 6mm, insbesondere mehr als 8mm und besonders bevorzugt mehr als 10mm zu realisieren. Insbesondere an der Außenfläche des Übergangsbereichs zwischen Gabelbrücke und Gabelschaft, an dem die innere Lagerschale des unteren Lenkkopflagers anliegt, ist das Vorsehen großer Radien vorteilhaft, da in diesem Bereich die Krafteinleitung stattfindet.

Vorzugsweise weist der Gabelschaft im Bereich der unteren Lageraufnahme einen größeren Durchmesser als im Bereich der oberen Lageraufnahme auf, wobei der Gabelschaft insbesondere konisch oder abgestuft ausgebildet ist. Das Gabelrohr des Fahrradrahmens weist vorzugsweise eine entsprechende Form auf, so dass das Gabelrohr in besonders bevorzugter Ausführungsform ebenfalls sich nach oben verjüngend, konisch bzw. kegelstumpfförmig ausgebildet ist. Insbesondere durch die Kombination eines erfindungsgemäßen kragenförmigen Ansatzes mit einem konischen oder stufenförmig ausgebildeten Gabelschaft kann die Steifigkeit der Fahrradgabel im Übergangsbereich zwischen Gabelbrücke und Gabelschaft erheblich verbessert werden.

Zur Herstellung des kragenförmigen Ansatzes kann ein vorzugsweise ebenfalls ringförmiges, den Gabelschaft umgebendes Werkzeug vorgesehen sein, das einen im Querschnitt keil- bzw. dreieckförmigen Ansatz bzw. Ring aufweist. Dieser Ring ragt in die Nut zwischen dem kragenförmigen Ansatz und dem Gabelschaft. Mit Hilfe des insbesondere ringförmigen Werkzeuges kann somit auf einfache Weise insbesondere im Übergangsbereich der unteren Lageraufnahme ein großer Radius realisiert werden, während außerhalb des Werkzeuges der kragenförmige Ansatz hergestellt wird. Hierbei ist es besonders bevorzugt, dass der kragenförmige Ansatz auch aus Carbonfaser hergestellt wird, wobei auch ein nachträgliches Anformen eines Ansatzes aus anderem Material wie Kunststoffschaum oder dergleichen möglich ist. Ein wesentlicher Schritt des erfindungsgemäßen Herstellungsverfahrens besteht somit darin, dass an einer Innenseite des vorstehend beschriebenen Werkzeuges die Carbonfasern mit großem Radius, wie vorstehend definiert, entlang geführt werden. Bei einer bevorzugten Weiterbildung des Verfahrens erfolgt auch die Ausbildung eines kragenförmigen Ansatzes durch Carbonwerkstoff, insbesondere einstückig.

Nachstehend wird die Erfindung anhand einer bevorzugten Ausführungsform unter Bezugnahme auf die anliegenden Zeichnungen näher erläutert.

### Es zeigen:

- Fig. 1: eine schematische Schnittansicht einer bevorzugten Ausführungsform der erfindungsgemäßen Fahrradgabel,
- Fig. 2: eine schematische Vorderansicht einer in einen Fahrradrahmen eingebauten Fahrradgabel gemäß Fig. 1, und
- Fig. 3: eine schematische Schnittansicht entlang der Linie III-III in Fig. 2.

Die erfindungsgemäße Fahrradgabel ist aus einem faserverstärkten Kunststoff, insbesondere Carbon, hergestellt. Die Fahrradgabel weist zwei Gabelbeine 10 auf, die über eine Gabelbrücke 12 miteinander verbunden sind. Die Gabelbrücke 12 ist mit einem Gabelschaft 14 verbunden, wobei die Gabelbeine 10, die Gabelbrücke und der Gabelschaft 14 vorzugsweise einstückig ausgebildet sind.

Die Fahrradgabel weist in einem Übergangsbereich 16 zwischen der Gabelbrücke 12 und dem Gabelschaft 14 einen kragenförmigen , vorzugsweise aus faserverstärktem Kunststoff hergestellten, Ansatz (Kragen) 18 auf. Der kragenförmiger Ansatz 18 ist vorzugsweise ringförmig ausgebildet und umgibt den Gabelschaft 14. Der Ansatz 18 weist nach oben, so dass zwischen dem Ansatz 18 und dem Gabeischaft 14 eine ebenfalls umlaufende ringförmige Nut 20 ausgebildet ist. Die Nut 20 weist einen dreieckigen bzw. keilförmigen Querschnitt auf.

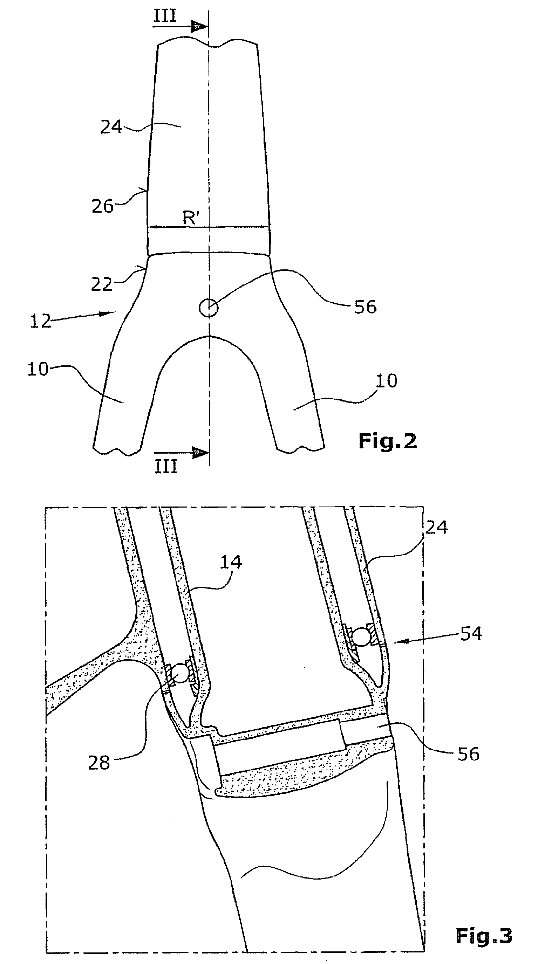

Eine Außenfläche 22 des Ansatzes 18 weist vorzugsweise einen Außendurchmesser R auf, der im Wesentlichen einem Außendurchmesser R' eines Gabelrohrs 24 eines Fahrradrahmens entspricht (Fig. 2). Hierdurch kann, wie insbesondere in Fig. 2 sichtbar, ein fließender Übergang zwischen einer Außenfläche 22 des Ansatzes 18 und einer Außenfläche 26 des Gabelrohrs 24 realisiert werden. Hierdurch ist ein innerhalb des Gabelrohrs angeordnetes unteres Lenkkopflager 28 (Fig. 3) vor Spritzwasser geschützt. Ferner dient der Ansatz (Kragen) 18 zur Versteifung der Fahrradgabel im Übergangsbereich 16.

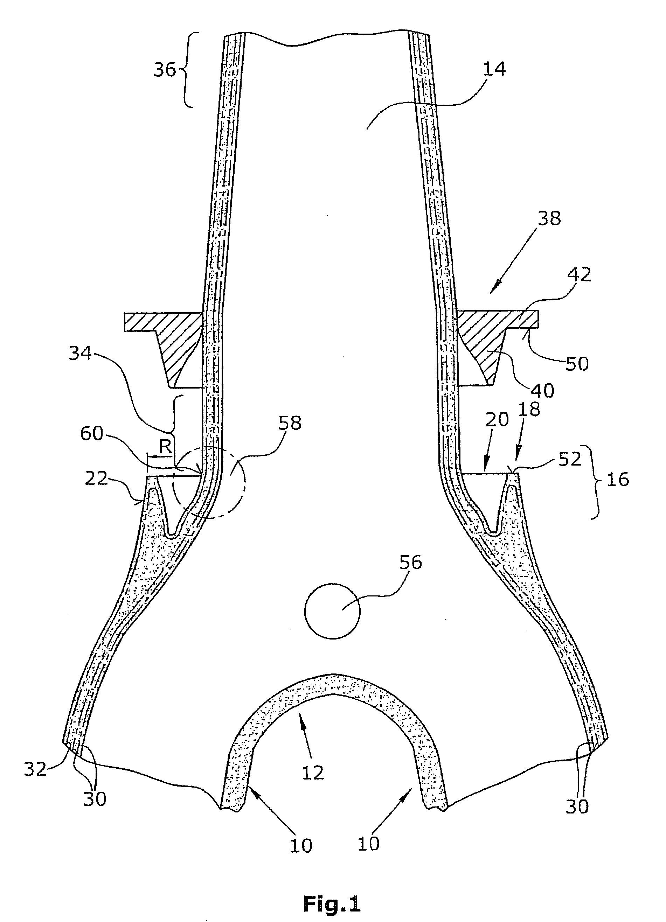

Die schematisch dargestellten Fasern 30 (Fig. 1) werden erfindungsgemäß, ausgehend von den Gabeibeinen 10 belastungsgerecht, das heißt mit großen Radien, durch die Gabelbrücke 12 in den Gabelschaft 14 geführt. Insbesondere in dem belastungskritischen Übergangsbereich 16 werden große Radien der Fasern 30 realisiert.

Zumindest eine äußere Faserlage 32 ist in den kragenförmigen Ansatz 18 geführt, um ein Versteifen des Kragens 18 zu bewirken. Hierdurch dient der Kragen als Versteifungsring des, bezogen auf die Belastung, kritischen Übergangsbereichs 16.

Um eine möglichst belastungsgerechte Anordnung der Fasern 30, insbesondere mit großen Radien im Übergangsbereich 16 realisieren zu können, ist es ferner besonders bevorzugt, dass der Gabelschaft 14 in einem Bereich 34, das heißt im Bereich der unteren Lageraufnahme, einen größeren Durchmesser aufweist, als in einem Bereich 36 der oberen Lageraufnahme. Der Gabelschaft ist somit stufenförmig oder konisch, bzw. kegelstumpfförmig ausgebildet. Durch die Vergrößerung des Außendurchmessers im Bereich 34 der unteren Lageraufnahme kann der Radius der Fasern 30 im Übergangsbereich 16 weiter vergrößert und somit die Steifigkeit der Gabel verbessert werden.

Insbesondere in einem Übergangsbereich 58 zwischen der Gabelbrücke und der unteren Lageraufnahme, ist es erfindungsgemäß vorteilhaft, dass ein großer Radius der Fasern 30, 32 realisiert werden kann. Insbesondere an einer Außenseite 60 in dem unteren Übergangsbereich 58 können Faserradien von vorzugsweise mehr als 6mm, insbesondere mehr als 8mm und besonders bevorzugt mehr als 10mm realisiert werden.

Zur Herstellung des erfindungsgemäßen kragenförmigen Ansatzes 18 kann ein mit der Werkzeugform verbundenes, insbesondere ringförmig ausgebildetes Werkzeug 38 (Fig. 1) verwendet werden. Das Werkzeug 38 weist einen dreieckförmigen bzw. keilförmigen Ansatz 40 auf, dessen Außenabmessungen den Innabmessungen der Nut 20 entsprechen. Ferner weist das Werkzeug 38 einen ringförmigen, nach außen weisenden Ansatz 42 mit einer insbesondere ebenen, horizontal ausgerichteten Unterseite 50 auf. Hierdurch ist in der Herstellung sichergestellt, dass eine Oberseite 52 des Kragens 18 eben ausgebildet ist, so dass diese mit einem geringen Abstand zum Gabelrohr 24 angeordnet werden kann, so dass ein Schlitz 54 mit geringer Breite realisiert ist.

Zur Aufnahme der Vorderradbremse weist die Gabel im Bereich der Gabelbrücke ferner eine Öffnung 56 auf.

## Patentansprüche

1. Fahrradgabel aus faserverstärktem Kunststoff, insbesondere Carbon-Fahrradgabel, mit
zwei über eine Gabelbrücke (12) miteinander verbundenen Gabelbeinen (10) und
einem mit der Gabelbrücke (12) verbundenen Gabelschaft (14),
wobei im Übergangsbereich (16) zwischen Gabelbrücke (12) und Gabelschaft (14) ein kragenförmiger Ansatz (18) vorgesehen ist, und zwischen dem Ansatz (18) und dem Gabelschaft (14) eine ringförmige Nut (20) ausgebildet ist,
**dadurch gekennzeichnet, dass**
äußere Hauptfasern (30) des faserverstärkten Kunststoffmaterials jeweils von den Gabelbeinen (10) durch die Gabelbrücke (12) in den Gabelschaft (14) geführt sind, wobei im Übergangsbereich (16) zwischen Gabelbrücke (12) und Gabelschaft (14) große Radien realisiert sind.

2. Fahrradgabel aus faserverstärktem Kunststoff nach Anspruch 1, **dadurch gekennzeichnet, dass** der Ansatz (18) ringförmig ausgebildet ist.

3. Fahrradgabel aus faserverstärktem Kunststoff nach Anspruch 1 oder 2, **dadurch gekennzeichnet, dass** die Nut (20) nach oben in Richtung des Gabelschafts (14) offen ist.

4. Fahrradgabel aus faserverstärktem Kunststoff nach einem der Ansprüche 1 bis 3, **dadurch gekennzeichnet, dass** ein Außendurchmesser (R) des Ansatzes (18) dem unterem Außendurchmesser (R') eines Gabelrohrs (24) eines Fahrradrahmens im Wesentlichen entspricht.

5. Fahrradgabel aus faserverstärktem Kunststoff nach einem der Ansprüche 1 bis 4, **dadurch gekennzeichnet, dass** im Übergangsbereich (58) der unteren Lageraufnahme (34) große Radien realisiert sind.

6. Fahrradgabel aus faserverstärktem Kunststoff nach einem der Ansprüche 1 bis 5, **dadurch gekennzeichnet, dass** die großen Radien im Ubergangsbereich (16) zwischen Gabelbrücke (12) und Gabelschaft (14) und insbesondere im Übergangsbereich (58) der unteren Lageraufnahme (34) mit einem Radius von mehr als 6mm, insbesondere mehr als 8 mm und besonders bevorzugt mehr als 10mm realisiert sind.

7. Fahrradgabel aus faserverstärktem Kunststoff nach einem der Ansprüche 1 bis 6, **dadurch gekennzeichnet, dass** der Gabelschaft (14) im Bereich der unteren Lageraufnahme (34) einen größeren Durchmesser als im Bereich der oberen Lageraufnahme (36) aufweist.

8. Fahrradrahmen, insbesondere Rennrad-Rahmen, mit
einem mit einem Oberrohr und einem Unterrohr verbundenen Gabelrohr (24), in dem ein Gabelschaft (14) einer Fahrradgabel aus faserverstärktem Kunststoff nach einem der Ansprüche 1-7 angeordnet ist.

9. Fahrradrahmen nach Anspruch 8, **dadurch gekennzeichnet, dass** das Gabelrohr (24) im Bereich der unteren Lageraufnahme (34) einen größeren Durchmesser hat als im Bereich der oberen Lageraufnahme (36).

## Claims

1. A bicycle fork of fiber-reinforced plastic material, in particular a bicycle fork of carbon, comprising
two fork blades (10) connected with each other by a fork crown (12), and
a steerer tube (14) connected with the fork crown (12),
wherein a collar-shaped protrusion (18) is provided in the transition region (16) between the fork crown (12) and the steerer tube (14), and an annular groove (20) is formed between the protrusion (18) and the fork tube (14),
**characterized in that**
outer main fibers (30) of the fiber-reinforced plastic material respectively pass from the fork blades (10) through the fork crown (12) into the fork tube (14), wherein large radii are realized in the transition region (16) between the fork crown (12) and the steerer tube (14).

2. The bicycle fork of fiber-reinforced plastic material according to claim 1, **characterized in that** the protrusion (18) is of annular shape.

3. The bicycle fork of fiber-reinforced plastic material according to claim 1 or 2, **characterized in that** the groove (20) is open to the top in the direction of the steerer tube (14).

4. The bicycle fork of fiber-reinforced plastic material according to one of claims 1 to 3, **characterized in that** an outer diameter (R) of the protrusion (18) substantially corresponds to the lower outer diameter (R') of a head tube (24) of a bicycle frame.

5. The bicycle fork of fiber-reinforced plastic material according to one of claims 1 to 4, **characterized in that** large radii are realized in the transition region (58) of the lower bearing seat (34).

6. The bicycle fork of fiber-reinforced plastic material according to one of claims 1 to 5, **characterized in that** the large radii in the transition region (16) between the fork crown (12) and the steerer tube (14) and in particular in the transition region (58) of the lower bearing seat (34) are realized with a radius of more than 6 mm, in particular more than 8 mm and particularly preferred more than 10 mm.

7. The bicycle fork of fiber-reinforced plastic material according to one of claims 1 to 6, **characterized in that** the steerer tube (14) has a larger diameter in the region of the lower bearing seat (34) that in the region of the upper bearing seat (36).

8. A bicycle frame, in particular a racing bike frame, comprising
a head tube (24) connected with a top tube and a down tube, in which head tube a steerer tube (14) of a bicycle fork of fiber-reinforced plastic material of one of claims 1 - 7 is arranged.

9. The bicycle frame of claim 8, **characterized in that** the head tube (24) has a larger diameter in the region of the lower bearing seat (34) that in the region of the upper bearing seat (36).

## Revendications

1. Fourche de bicyclette en matière synthétique renforcée par fibres, en particulier fourche de bicyclette en carbone, comprenant deux jambages de fourche (10) réunis l'un à l'autre par l'intermédiaire d'un pont de fourche (12), et
un pivot de fourche (14) solidaire du pont de fourche (12),
dans laquelle une saillie (18) en forme de collet est prévue dans la région de transition (16) entre le pont de fourche (12) et le pivot de fourche (14) et une gorge annulaire (20) est formée entre la saillie (18) et le pivot de fourche (14),
**caractérisée en ce que** des fibres principales extérieures (30) de la matière synthétique renforcée par fibres sont guidées de chacun des jambages (10) de la fourche jusque dans le pivot de fourche (14) en passant par le pont de fourche (12), de grands rayons étant réalisés dans la région de transition (16) entre le pont de fourche (12) et le pivot de fourche (14).

2. Fourche de bicyclette en matière synthétique renforcée par fibres selon la revendication 1, **caractérisée en ce que** la saillie (18) est de forme annulaire.

3. Fourche de bicyclette en matière synthétique renforcée par fibres selon la revendication 1 ou 2, **caractérisée en ce que** la gorge (20) est ouverte vers le haut en direction du pivot de fourche (14).

4. Fourche de bicyclette en matière synthétique renforcée par fibres selon l'une des revendications 1 à 3, **caractérisée en ce que** le diamètre extérieur (R) de la saillie correspond sensiblement au diamètre extérieur inférieur (R') d'un tube de fourche (24) de cadre de bicyclette.

5. Fourche de bicyclette en matière synthétique renforcée par fibres selon l'une des revendications 1 à 4, **caractérisée en ce que** de grands rayons sont réalisés dans la région de transition (58) du logement de palier inférieur (34).

6. Fourche de bicyclette en matière synthétique renforcée par fibres selon l'une des revendications 1 à 5, **caractérisée en ce que** les grands rayons existant dans la région de transition (16) entre le pont de fourche (12) et le pivot de fourche (14), et en particulier dans la région de transition (58) du logement de palier inférieur (34) sont réalisés avec un rayon de plus de 6 mm, en particulier de plus de 8 mm et de façon particulièrement préférée de plus de 10 mm.

7. Fourche de bicyclette en matière synthétique renforcée par fibres selon l'une des revendications 1 à 6, **caractérisée en ce que** le pivot de fourche (14) présente un plus grand diamètre dans la région du logement de palier inférieur (34) que dans la région du logement de palier supérieur (36).

8. Cadre de bicyclette, en particulier cadre de bicyclette de course, comprenant
un tube de fourche (24) relié à un tube supérieur et un tube inférieur, dans lequel est disposé un pivot (14) d'une fourche de bicyclette en matière synthétique renforcée par fibres selon l'une des revendications 1 à 7.

9. Cadre de bicyclette selon la revendication 8, **caractérisé en ce que** le tube de fourche (24) a un plus grand diamètre dans la région du logement de palier inférieur (34) que dans la région du logement de palier supérieur (36).
